# EUROPEAN PATENT SPECIFICATION

(11) **EP 4 099 444 B1**
(45) Date of publication and mention of the grant of the patent: **25.06.2025**
(21) Application number: 21747202.6
(22) Date of filing: 19.01.2021
(51) Int. Cl.: H01M 4/36, H01M 4/505, H01M 4/525

(54) **POSITIVE ELECTRODE ACTIVE MATERIAL FOR NONAQUEOUS ELECTROLYTE SECONDARY BATTERIES, AND NONAQUEOUS ELECTROLYTE SECONDARY BATTERY**
POSITIVELEKTRODENAKTIVMATERIAL FÜR SEKUNDÄRBATTERIEN MIT WASSERFREIEM ELEKTROLYT UND SEKUNDÄRBATTERIE MIT WASSERFREIEM ELEKTROLYT
MATÉRIAU ACTIF D'ÉLECTRODE POSITIVE POUR BATTERIES SECONDAIRES À ÉLECTROLYTE NON AQUEUX, ET BATTERIE SECONDAIRE À ÉLECTROLYTE NON AQUEUX

(30) Priority: 31.01.2020 JP 2020014463
(43) Date of publication of application: 07.12.2022
(73) Proprietor: SANYO Electric Co., Ltd., Daito-shi Osaka 574-8534 (JP)
(72) Inventor: WATANABE, Hiroki, Chuo-ku, Osaka-shi, Osaka 540-6207 (JP); HIRATSUKA, Hidekazu, Chuo-ku, Osaka-shi, Osaka 540-6207 (JP)
(74) Representative: Novagraaf International SA
(86) International application number: PCT/JP2021/001685
(87) International publication number: WO 2021/153350

(56) References cited:
- WO-A1-2019/044205
- WO-A1-2019/131779
- CN-A- 1 706 058
- JP-A- 2010 086 693
- JP-A- 2010 086 693
- JP-A- 2011 113 825
- JP-A- 2018 174 106

## Description

### TECHNICAL FIELD

The present disclosure relates to a positive electrode active material for non-aqueous electrolyte secondary batteries and a non-aqueous electrolyte secondary battery.

### BACKGROUND ART

In recent years, Ni-containing lithium composite oxides with high Ni contents have been attracting attention as positive electrode active materials for non-aqueous electrolyte secondary batteries that greatly contribute to increase capacities of batteries. Moreover, positive electrodes in which two types of positive electrode active materials having different average particle sizes are combined for use, have been known (see, for example, Patent Literature 1). In this case, the combination of small and large particles largely different in particle size from each other improves the packing density of the active material in the positive electrode mixture layer, enabling a battery of higher capacity.

### CITATION LIST

### PATENT LITERATURE

PATENT LITERATURE 1: Japanese Unexamined Patent Application Publication No. 2011-113825

### SUMMARY

In non-aqueous electrolyte secondary batteries, particle cracking may occur due to expansion and shrinkage of positive electrode active material particles, accompanying charge and discharge, which may result in deterioration of storage and cycle characteristics. For both small and large particles, it is an important issue to inhibit occurrence of particle cracking and to inhibit gas generation and capacity deterioration under elevated temperature environments. The technology disclosed in Patent Literature 1 does not take into consideration of inhibition of deterioration of storage and cycle characteristics, and still has room for improvement.

The positive electrode active material for non-aqueous electrolyte secondary batteries of the invention is defined in claim 1.

The non-aqueous electrolyte secondary battery that is one aspect of the present disclosure comprises a positive electrode including the aforementioned positive electrode active material for non-aqueous electrolyte secondary batteries, a negative electrode, and a non-aqueous electrolyte.

According to the positive electrode active material that is one aspect of the present disclosure, it is possible to provide a non-aqueous electrolyte secondary battery of high capacity, having favorable storage and cycle characteristics.

### BRIEF DESCRIPTION OF DRAWING

FIG. 1 is a cross sectional plan view of the non-aqueous electrolyte secondary battery according to an example of an embodiment.
FIG. 2A is a schematically illustrated view of Ni-containing lithium composite oxide A according to an example of an embodiment.
FIG. 2B is a schematically illustrated view of Ni-containing lithium composite oxide B according to an example of an embodiment.

### DESCRIPTION OF EMBODIMENTS

As described above, the combined use of two types of Ni-containing lithium composite oxides having different average particle sizes greatly contributes to a higher capacity of a battery, but it is not easy to inhibit occurrence of particle cracking and capacity deterioration for both small and large particles. The present inventors have diligently investigated this issue and succeeded in inhibiting the occurrence of particle cracking for both small and large particles, respectively, by different mechanisms. In the small particle having an average secondary particle size of 2 µm to 6 µm, enlarging a primary particle size to 2 µm or larger can increase a strength at particle fracture to 5 mN or higher. In the large particle having an average secondary particle size of 10 µm to 20 µm, forming a coating layer on the surface of the primary particles can strengthen a bonding force between the primary particles and thus increase the strength at particle fracture to 20 mN or higher. By combining the small and large particles of Ni-containing lithium composite oxides having the high loads at particle fracture and inhibiting the occurrence of particle cracking, a non-aqueous electrolyte secondary battery of high capacity, having favorable storage and cycle characteristics can be realized.

An example of the embodiment of the positive electrode active material and the non-aqueous electrolyte secondary battery, according to the present disclosure will be described in detail below.

In the embodiments that will be described below, a cylindrical battery in which a wound electrode assembly 14 is housed in a cylindrical battery case 15 is illustrated, however, the battery case is not limited to a cylindrical shape, and may be, for example, a square shape, a coin shape or the like, or may be a battery case formed of a laminated sheet including a metal layer and a resin layer. Moreover, the electrode assembly is not limited to the wound type, and may be a stacked electrode assembly where a plurality of positive electrodes and a plurality of negative electrodes are alternately stacked one by one with separators interposed therebetween.

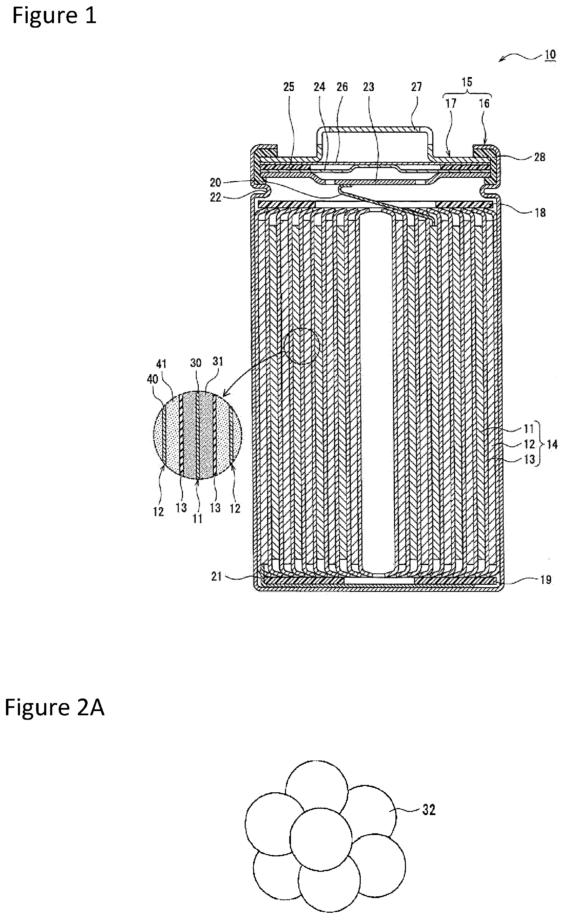

FIG. 1 is a cross sectional plan view of a non-aqueous electrolyte secondary battery 10 that is an example of the embodiment. As illustrated in FIG. 1, non-aqueous electrolyte secondary battery 10 comprises wound electrode assembly 14, a non-aqueous electrolyte, and battery case 15 that houses electrode assembly 14 and the non-aqueous electrolyte. Electrode assembly 14 has a wound structure in which a positive electrode 11 and a negative electrode 12 are wound via a separator 13. Battery case 15 is composed of a bottomed cylindrical outer can 16 and a sealing assembly 17 that clogs up the opening of outer can 16. Further, non-aqueous electrolyte secondary battery 10 comprises a gasket 28 made of resin that is arranged between outer can 16 and a sealing assembly 17.

Electrode assembly 14 is composed of long positive electrode 11, long negative electrode 12, two long separators 13, a positive electrode tab 20 joined to positive electrode 11, and a negative electrode tab 21 joined to negative electrode 12. Negative electrode 12 is formed to have a size one size larger than that of positive electrode 11 in order to prevent lithium from precipitation. Namely, negative electrode 12 is formed longer than positive electrode 11 in the longitudinal direction and the width direction (short direction). Two separators 13 are formed to have sizes at least one size larger than a size of positive electrode 11, and are arranged to sandwich positive electrode 11, for example.

Insulating plates 18 and 19 are arranged above and below electrode assembly 14. In the example shown in FIG. 1, positive electrode tab 20 attached to positive electrode 11 extends to the sealing assembly 17 side through the throughhole of insulating plate 18, and negative electrode tab 21 attached to negative electrode 12 passes through the outside of insulating plate 19 and extends to the bottom side of outer can 16. Positive electrode tab 20 is connected to a lower surface of a bottom plate 23 of sealing assembly 17 by welding or the like, and a cap 27 that is a tabletop of sealing assembly 17 electrically connected to bottom plate 23 serves as a positive electrode terminal. Negative electrode tab 21 is connected to the inner surface of the bottom of outer can 16 by welding or the like, and outer can 16 serves as a negative electrode terminal.

Outer can 16 is, for example, a bottomed cylindrical metal container. Gasket 28 is arranged between outer can 16 and sealing assembly 17 and seals the internal space of battery case 15. Outer can 16 has a grooved portion 22 that supports sealing assembly 17, which is formed by pressing, for example, the side surface portion from the outside. Grooved portion 22 is preferably formed in an annular shape along the circumferential direction of outer can 16 and supports sealing assembly 17 on the upper surface of the grooved portion. Further, the upper end of outer can 16 is bent inward and cinched to the peripheral portion of sealing assembly 17.

Sealing assembly 17 has a structure in which bottom plate 23, a lower vent member 24, an insulating member 25, an upper vent member 26, and cap 27 are stacked in this order from the electrode assembly 14 side. Each member constituting sealing assembly 17 has, for example, a disk shape or a ring shape, and each member except insulating member 25 is electrically connected to each other. Lower vent member 24 and upper vent member 26 are connected at the central portion thereof, and insulating member 25 is interposed between the peripheral portions of each member. When the internal pressure of the battery rises due to abnormal heat generation, lower vent member 24 is deformed and broken so as to push upper vent member 26 toward the cap 27 side, whereby the current path between lower vent member 24 and upper vent member 26 is cut off. When the internal pressure further rises, upper vent member 26 is broken and a gas is discharged from the opening of cap 27.

Hereinafter, positive electrode 11, negative electrode 12, separator 13, and the non-aqueous electrolyte, constituting non-aqueous electrolyte secondary battery 10, will be described in detail, and in particular, the positive electrode active material included in positive electrode 11 will be described in detail.

### [Positive Electrode]

Positive electrode 11 has a positive electrode current collector 30 and a positive electrode mixture layer 31 formed on both sides of positive electrode current collector 30. As positive electrode current collector 30, a foil of a metal such as aluminum or an aluminum alloy that is stable in the potential range of positive electrode 11, or a film or the like in which the metal is arranged on the surface layer, can be used. Positive electrode mixture layer 31 includes the positive electrode active material, a conductive agent, and a binder. The thickness of positive electrode mixture layer 31 is, for example, 10 µm to 150 µm on one side of the current collector. Positive electrode 11 is fabricated by coating the surface of positive electrode current collector 30 with a positive electrode mixture slurry including the positive electrode active material, the conductive agent, the binder, etc., drying the coating film, and then compressing it to form positive electrode mixture layers 31 on both sides of positive electrode current collector 30.

The conductive agent included in positive electrode mixture layer 31 that is carbon materials such as carbon black, acetylene black, Ketjen black, and graphite, can be exemplified. As the binder included in positive electrode mixture layer 31, fluororesins such as polytetrafluoroethylene (PTFE) and polyvinylidene difluoride (PVdF), polyacrylonitrile (PAN), polyimides, acrylic resins, and polyolefins can be exemplified. These resins may be combined with carboxymethyl cellulose (CMC) or a salt thereof, polyethylene oxide (PEO), or the like.

Positive electrode mixture layer 31 includes two types of Ni-containing lithium composite oxides A and B each as the positive electrode active material, having a different average primary particle size and different average secondary particle size from each other. Ni-containing lithium composite oxides A and B are composite oxides including at least Li and Ni. Positive electrode mixture layer 31 may include a positive electrode active material other than Ni-containing lithium composite oxides A and B to the extent that the purpose of the present disclosure is not impaired. However, in the present embodiment, only Ni-containing lithium composite oxides A and B are included as the positive electrode active materials.

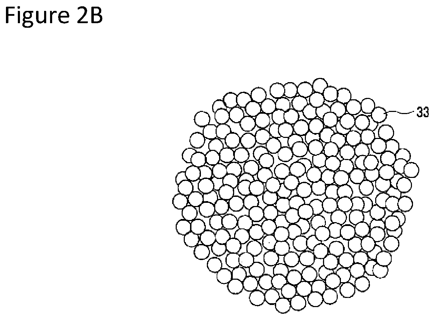

FIG. 2A is the schematically illustrated view of Ni-containing lithium composite oxide A, and FIG. 2B is the schematically illustrated view of Ni-containing lithium composite oxide B. As shown in FIGs. 2A and 2B, Ni-containing lithium composite oxides A and B are each the secondary particle in which primary particles 32 and 33 are aggregated. Ni-containing lithium composite oxide A (secondary particle) has a smaller particle size than Ni-containing lithium composite oxide B (secondary particle). Primary particle 32 constituting Ni-containing lithium composite oxide A, on the other hand, is larger than primary particle 33 constituting Ni-containing lithium composite oxide B. Combining Ni-containing lithium composite oxides A and B for use, can contemplate to increase the packing density of the positive electrode active material in positive electrode mixture layer 31 to obtain a battery of high capacity while maintaining favorable storage and cycle characteristics.

Ni-containing lithium composite oxides A and B each is a composite oxide having a proportion of Ni to the total number of mole of metal elements excluding Li of 50 mol% or more, preferably 80 mol% or more, and more preferably 85 mol% or more Ni-containing lithium composite oxides A and B may include elements other than Li and Ni, and include, for example, at least one of element selected from the group consisting of Co, Mn, Mg, Zr, Mo, W, Al, Cr, V, Ce, Ti, Fe, Si, K, Ga, In, B, Ca, and Na. Ni-containing lithium composite oxides A and B each include at least one of Co and Mn, and preferably at least Co, and includes at least one of metal element selected from the group consisting of Mg, Zr, Mo, W, Al, Cr, V, Ce, Ti, Fe, K, Ga, In, and B.

One suitable example of Ni-containing lithium composite oxides A and B is a composite oxide represented by the formula: LiₐNiₓCO_{y}M_{(1-x-y})O₂ wherein in the formula, 1.00 ≤α ≤1.15, 0.8 ≤x <1.0, 0 ≤ y ≤0.3, and M is an element excluding Li, Ni, and Co. M in the formula is at least one element selected from the group consisting of Mn, Mg, Zr, Mo, W, Nb, Al, Cr, V, Ce, Ti, Fe, Si, K, Ga, In, B, Ca, and Na. The compositions of Ni-containing lithium composite oxides A and B may be substantially the same.

Ni-containing lithium composite oxide A has an average particle size of primary particles 32 (hereinafter, sometimes referred to as "average primary particle size A") of 2 µm or larger, and an average particle size of the secondary particles (hereinafter, sometimes referred to as "average secondary particle size A") of 2 µm to 6 µm. Moreover, Ni-containing lithium composite oxide B has an average particle size of primary particles 32 (hereinafter, sometimes referred to as "average primary particle size B") of 1 µm or smaller and an average particle size of the secondary particles (hereinafter, sometimes referred to as "average secondary particle size B") of 10 µm to 20 µm. When at least Ni-containing lithium composite oxide B has a coating layer to be described below, and further a load at particle fracture to be described below satisfies the specified conditions, while the average primary particle sizes and the average secondary particle sizes of Ni-containing lithium composite oxides A and B satisfy the aforementioned conditions, the occurrence of particle cracking in Ni-containing lithium composite oxides A and B will be inhibited, enabling increase in the storage and cycle characteristics of a battery.

Average primary particle size A of Ni-containing lithium composite oxide A is preferably 2 µm to 6 µm and more preferably 3 µm to 5 µm. Average primary particle size B of Ni-containing lithium composite oxide B is preferably 0.1 µm to 1 µm and more preferably 0.2 µm to 0.7 µm. If average primary particle sizes A and B are within the aforementioned ranges, the storage and cycle characteristics of a battery can be further improved.

Average primary particle sizes A and B are determined by analyzing cross-sectional SEM images observed by scanning electron microscopy (SEM). For example, the positive electrode is embedded in a resin, then a cross-section of the positive electrode mixture layer is made by cross section polisher (CP) processing or the like, and this cross-section is photographed by SEM. Alternatively, a powder of Ni-containing lithium composite oxide A or B is embedded in a resin, then a cross-section of the composite oxide particles by CP processing or the like is made, and this cross-section is photographed by SEM. Then, 30 primary particles are selected at random from this cross-sectional SEM image. After observing grain boundaries of the 30 selected primary particles and identifying an external shape of each primary particle, a long diameter (the longest diameter) of each of the 30 primary particles is determined, and the average value of the longest diameters is defined as the average primary particle size A or B.

The average secondary particle sizes A and B are also determined from the cross-sectional SEM images described above. Specifically, 30 secondary particles (Ni-containing lithium composite oxide A or B) are randomly selected from the cross-sectional SEM image described above, and after observing the grain boundaries of the 30 selected secondary particles and identifying an external shape of each secondary particle, a long diameter (the longest diameter) of each of the 30 secondary particles is determined, and the average value of the longest diameters is defined as the average particle size of the secondary particles.

Ni-containing lithium composite oxide B has a coating layer on a surface of the primary particle. This strengthens the binding force between the primary particles, inhibits occurrence of particle cracking, and improves the storage and cycle characteristics of a battery. Ni-containing lithium composite oxide B has a coating layer on the surface of the primary particle at least inside the secondary particle and may have a coating layer on the surface of the secondary particle. Moreover, Ni-containing lithium composite oxide A may also have a coating layer on the surface of the primary particle, which can inhibit occurrence of particle cracking in Ni-containing lithium composite oxide A.

The coating layer may include at least one or more elements selected from the group consisting of B, Al, and Ti, and suitably includes at least one of B and Al. The coating layer may be, for example, a compound including Li, and lithium borate (LiBO₂, Li₂B₄O₇), lithium aluminate (LiAlO₂), and lithium titanate (Li₂TiO₃) are exemplified.

A molar fraction of metal elements excluding Li included in the coating layer relative to the total number of mole of metal elements excluding Li in Ni-containing lithium composite oxide B can be, for example, 0.05% to 5%, more preferably 0.05% to 3%. If the molar fraction of metal elements excluding Li included in the coating layer is less than 0.05%, sufficient bonding strength cannot be obtained, and the molar fraction being more than 5% increases a resistance and decreases battery performance.

A load at particle fracture of Ni-containing lithium composite oxide A is 5 mN or larger, and a load at particle fracture of Ni-containing lithium composite oxide B is 20 mN or larger. In the positive electrode mixture layer, Ni-containing lithium composite oxide B having a larger particle size is more likely to receive a larger load than Ni-containing lithium composite oxide A, and therefore, the load at particle fracture of Ni-containing lithium composite oxide B is preferably larger than the load at particle fracture of Ni-containing lithium composite oxide A.

The load at particle fracture is determined by using a microcompression tester ("MCT-W201" manufactured by Shimadzu Corporation) under the following measurement conditions. Specifically, amounts of deformation and load of a resin particle are measured when a load is applied to the sample particle at the following loading rate, and the load (N) when the sample particle is deformed and reaches a fracture point (the point where the displacement begins to increase rapidly) is used as the load at particle fracture.

### (Conditions for Measuring Load at Particle Fracture)

Test temperature: Room temperature (25°C)
Upper pressurization indenter: flat indenter with 50 µm diameter (material: Diamond)
Lower pressurization plate: SKS flat plate
Measurement mode: Compression test
Test load: Minimum 10 mN, maximum 50 mN
Loading rate: Minimum 0.178 mN/sec, minimum 0.221 mN/sec.
Displacement full scale: 10 µm

BET specific surface areas of Ni-containing lithium composite oxides A and B may be in the range of 0.1 m²/g to 1.0 m²/g. This inhibits the occurrence of particle cracking in Ni-containing lithium composite oxides A and B, and further improves the storage and cycle characteristics of the battery. The BET specific surface area can be measured, for example, by a commercially available measurement apparatus, HM model-1201 manufactured by Macsorb Co., Ltd or the like.

In positive electrode mixture layer 31, Ni-containing lithium composite oxide A is included preferably in an amount of 5 to 60% by mass, more preferably in an amount of 10 to 55% by mass, and particularly preferably in an amount of 30 to 50% by mass, relative to the mass of Ni-containing lithium composite oxide B. A mixing ratio of Ni-containing lithium composite oxides A and B being within the range described above facilitates both high capacity and favorable storage and cycle characteristics to be achieved.

Hereinafter, an example of the method for producing Ni-containing lithium composite oxides A and B will be described in detail.

Ni-containing lithium composite oxide A is synthesized via a two-stage calcination step of a first calcination step A of calcinating a first mixture A including a Li compound and a transition metal compound including 50 mol% or more of Ni, preferably 80 mol% or more of Ni, and a second calcination step A of calcinating the calcinated product A obtained in the first calcination step A and a second mixture A including the Li compound. Moreover, Ni-containing lithium composite oxide B is synthesized via a two-stage calcination step of a first calcination step B of calcinating a first mixture B including a Li compound and a transition metal compound including 50 mol% or more of Ni, preferably 80 mol% or more of Ni, and a second calcination step B of calcinating the calcinated product B obtained in the first calcination step B and a second mixture B including an additive including at least one or more elements selected from the group consisting of B, Al, and Ti.

### [Synthesis of Ni-Containing Lithium Composite Oxide A]

### <First Calcination Step A>

A content of Li in first mixture A is preferably 0.7 to 1.1 by molar ratio to the total amount of transition metals, and more preferably 0.8 to 1.0. A calcination temperature of first mixture A is preferably 700°C to 1000°C and more preferably 750°C to 900°C. A calcination time is, for example, 3 hours to 10 hours. The content of Li in first mixture A and the calcination temperature, etc., being within the ranges described above, facilitate the primary particle size and the average particle size of the secondary particles, of Ni-containing lithium composite oxide A as well as the load at particle fracture to be adjusted to the above ranges.

The Li compounds included in first mixture A include, for example, Li₂CO₃, LiOH, Li₂O₃, Li₂O, LiNO₃, LiNO₂, Li₂SO₄, LiOH•H₂O, LiH, LiF, etc.

The transition metal compound included in first mixture A is not particularly limited as long as it includes 50 mol% or more of Ni and preferably 80 mol% or more of Ni, and it is preferably a compound including at least one of Co and Mn in addition to Ni, in terms such as improving stability of the crystal structure of Ni-containing lithium composite oxide A finally obtained.

### <Second Calcination Step A>

A content of Li in second mixture A is preferably 0.01 to 0.3 by molar ratio to the total amount of transition metals, and more preferably 0.05 to 0.2. A calcination temperature of second mixture A is preferably 600°C to 900°C and more preferably 700°C to 800°C. A calcination time is, for example, 5 hours to 20 hours. The content of Li in second mixture A and the calcination temperature, etc., being within the ranges described above, facilitate the primary particle size and the average particle size of the secondary particles, of the Ni-containing lithium composite oxide A as well as the load at particle fracture to be adjusted to the above ranges. In second calcination step A, for example, calcination is carried out at a lower temperature and for a longer period of time than in first calcination step A.

The Li compound included in second mixture A may be the same as the Li compound included in first mixture A or may be different from the Li compound included in first mixture A. The lithium compound includes, for example, Li₂CO₃, LiOH, Li₂O₃, Li₂O, LiNO₃, LiNO₂, Li₂SO₄, LiOH•H₂O, Li₃PO₄, LiH, LiF, etc.

### [Synthesis of Ni-Containing Lithium Composite Oxide B]

### <First Calcination Step B>

A content of Li in first mixture B is preferably 0.8 to 1.2 by molar ratio to the total amount of transition metals, and more preferably 0.9 to 1.1. A calcination temperature of first mixture B is preferably 700°C to 1,000°C and more preferably 750°C to 900°C. A calcination time is, for example, 3 hours to 10 hours. The content of Li in the mixture and the calcination temperature, etc., being within the ranges described above, facilitate the primary particle size and the average particle size of the secondary particles, of the Ni-containing lithium composite oxide B as well as the load at particle fracture to be adjusted to the above ranges.

The Li compounds included in first mixture B include, for example, Li₂CO₃, LiOH, Li₂O₃, Li₂O, LiNO₃, LiNO₂, Li₂SO₄, LiOH•H₂O, LiH, LiF, etc.

The transition metal compound included in first mixture B is not particularly limited as long as it includes 50 mol% or more of Ni and preferably 80 mol% or more of Ni, and it is preferably a compound including at least one of Co and Mn in addition to Ni, in terms such as improving stability of the crystal structure of Ni-containing lithium composite oxide B finally obtained.

### <Second Calcination Step B>

A content of the additive in second mixture B is preferably 0.01 to 0.3 by molar ratio to the total amount of transition metal, and more preferably 0.05 to 0.2. The additive is not particularly limited as long as it includes at least one or more elements selected from the group consisting of B, Al, and Ti, and boric acid (H₃BO₃), boron oxide (B₂O₃), aluminum hydroxide (Al(OH)₃), aluminum oxide (Al₂O₃), and titanium oxide (TiO₂) are exemplified, for example. Moreover, the additive may also be a solution including at least one or more elements selected from the group consisting of B, Al, and Ti. A concentration of the element in the solution is, for example, 0.05 mol/L to 2 mol/L. For example, as a B-containing solution, boric acid, meta-boric acid, tetraboric acid or the like, can be exemplified.

A calcination temperature of second mixture B is preferably 600°C to 900°C and more preferably 700°C to 800°C. A calcination time is, for example, 5 hours to 20 hours. The content of the additive in second mixture B and the calcination temperature, etc., being within the ranges described above, facilitate the primary particle size and the average particle size of the secondary particles, of the Ni-containing lithium composite oxide A as well as the load at particle fracture to be adjusted to the above ranges. In second calcination step B, for example, the calcination is carried out at a lower temperature and for a longer period of time than in first calcination step B.

### [Negative Electrode]

Negative electrode 12 has a negative electrode current collector 40 and negative electrode mixture layers 41 formed on both sides of negative electrode current collector 40. As negative electrode current collector 40, a foil of a metal such as copper or a copper alloy that is stable in the potential range of negative electrode 12, or a film or the like in which the metal is arranged on the surface layer, can be used. Negative electrode mixture layer 41 includes a negative electrode active material and a binder. The thickness of negative electrode mixture layer 41 is, for example, 10 µm to 150 µm on one side of, for example, the current collector. Negative electrode 12 can be fabricated by coating a surface of negative electrode current collector 40 with a negative electrode mixture slurry including the negative electrode active material, the binder, etc., drying the coating film, and then rolling it to form negative electrode mixture layers 41 on both sides of negative electrode current collector 40.

The negative electrode active material is not particularly limited provided that it can reversibly intercalate and deintercalate lithium ions, and a carbon material such as graphite is generally used. The graphite may be any of natural graphite such as scaly graphite, massive graphite and earthy graphite, and artificial graphite such as massive artificial graphite and graphitized mesophase carbon microbeads. Moreover, as the negative electrode active material, a metal such as Si or Sn that alloys with Li, a metal compound including Si, Sn or the like, a lithium titanium composite oxide, or the like may be used. For example, a Si-containing compound represented by SiOₓ (0.5 ≤x ≤1.6), a Si-containing compound in which Si fine particles are dispersed in a lithium silicate phase represented by Li_{2y}SiO_{(2+y)} (0 <y <2), or the like can be combined with graphite.

As the binder included in negative electrode mixture layer 41, a fluororesin such as PTFE or PVdF, a PAN, a polyimide, an acrylic resin, a polyolefin or the like may be used as in the case of positive electrode 11, however, styrene-butadiene rubber (SBR) is preferably used. Moreover, negative electrode mixture layer 41 may include CMC or a salt thereof, polyacrylic acid (PAA) or a salt thereof, polyvinyl alcohol (PVA), etc. Negative electrode mixture layer 41 includes, for example, SBR and CMC or a salt thereof.

### [Separator]

Separator 13 that is a porous sheet having ion permeability and insulating property, is used. Specific examples of the porous sheet include a microporous thin membrane, a woven fabric, and a non-woven fabric. As a material of the separator, a polyolefin such as polyethylene or polypropylene, cellulose, or the like is suitable. Separator 13 may have a single-layer structure or a multilayer structure. Further, a resin layer having high heat resistance, such as an aramid resin, and a filler layer including a filler of an inorganic compound, may be disposed on a surface of separator 13.

### [Non-Aqueous Electrolyte]

The non-aqueous electrolyte includes a non-aqueous solvent and an electrolyte salt dissolved in the non-aqueous solvent. As the non-aqueous solvent, for example, an ester, an ether, a nitrile such as acetonitrile, an amide such as dimethylformamide, or a mixed solvent of two or more of them can be used. The non-aqueous solvent may include a halogen substituent in which at least a portion of hydrogen in the solvent is substituted with a halogen atom such as fluorine. The halogen substituent includes, for example, a fluorinated cyclic carbonate such as fluoroethylene carbonate (FEC), a fluorinated chain carbonate, and a fluorinated chain carboxylic acid ester such as fluorine methyl propionate (FMP).

Examples of the aforementioned esters include cyclic carbonate esters such as ethylene carbonate (EC), propylene carbonate (PC) and butylene carbonate, chain carbonate esters such as dimethyl carbonate (DMC), ethyl methyl carbonate (EMC), diethyl carbonate (DEC), methylpropyl carbonate, ethylpropyl carbonate, and methylisopropylcarbonate, cyclic carboxylic acid esters such as γ-butyrolactone (GBL) and γ-valerolactone (GVL), and chain carboxylic acid esters such as methyl acetate, ethyl acetate, propyl acetate, methyl propionate (MP) and ethyl propionate.

Examples of the aforementioned ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5 -trioxane, furan, 2-methylfuran, 1,8-cineole, crown ether, and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

The electrolyte salt is preferably a lithium salt. Examples of lithium salts include borates such as LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (1 <x <6, n is 1 or 2), LiB₁₀Cl₁₀, LiCl, LiBr, LiI, lithium chloroborane, lithium lower aliphatic carboxylate, Li₂B₄O₇, Li(B(C₂O₄)F₂), and imide salts such as LiN(SO₂CF₃)₂ and LiN(C₁F₂₁₊₁SO₂) (CₘF₂ₘ₊₁SO₂) wherein l and m are integers of 0 or more. The lithium salt may be used alone, or a plurality of types may be mixed and used. Among them, LiPF₆ is preferably used from the viewpoint of ionic conductivity, electrochemical stability, etc. The concentration of the lithium salt is, for example, 0.8 mol to 1.8 mol per 1 L of the non-aqueous solvent.

### <Examples>

The present disclosure will be further described below with reference to Examples, but the present disclosure is not limited to the following Examples.

### <Example 1>

### [Synthesis of Ni-Containing Lithium Composite Oxide A]

LiOH and Ni_{0.80}Co_{0.10}Mn_{0.10}(OH)₂ were mixed so that the molar ratio of Li to the total amount of Ni, Co, and Mn was 0.90. Subsequently after the mixture was held at 900°C for 5 hours (first calcination step A), a calcinated product A of Ni-containing lithium composite oxide was obtained. Next, LiOH and calcinated product A were mixed so that the molar ratio of Li to the total amount of Ni, Co, and Mn was 0.15. This mixture was held at 750°C for 10 hours (second calcination step A) to obtain a Ni-containing lithium composite oxide A.

Ni-containing lithium composite oxide A is a secondary particle formed by aggregating primary particles, and the average particle size of the primary particles of Ni-containing lithium composite oxide A was 3.1 µm and the average particle size of the secondary particles was 4.3 µm. The measurement method of the average particle sizes is as described above. Moreover, the load at particle fracture of Ni-containing lithium composite oxide A was 20 mN. The method of measuring the load at particle fracture is as described above. In addition, calculation of the composition of Ni-containing lithium composite oxide A by ICP emission analysis (an ICP emission spectroscopic analyzer iCAP6300, manufactured by Thermo Fisher Scientific Inc.) demonstrated that the oxide was Li_{1.05}Ni_{0.80}Co_{0.10}Mn_{0.10}O₂.

### [Synthesis of Ni-Containing Lithium Composite Oxide B1]

LiOH and Ni_{0.80}Co_{0.10}Mn_{0.10}(OH)₂ were mixed so that the molar ratio of Li to the total amount of Ni, Co, and Mn was 1.05. Subsequently after the mixture was held at 900°C for 5 hours (first calcination step B), a calcinated product B of the Ni-containing lithium composite oxide was obtained. Next, boric acid (H₃BO₃) and calcinated product B were mixed so that the molar ratio of B to the total amount of Ni, Co, and Mn was 0.5. This mixture was held at 750°C for 10 hours (second calcination step B) to obtain a Ni-containing lithium composite oxide B1.

Ni-containing lithium composite oxide B1 is a secondary particle formed by aggregating primary particles as in the case of Ni-containing lithium composite oxide A, and the average particle size of the primary particles of Ni-containing lithium composite oxide B1 was 0.5 µm and the average particle size of the secondary particles was 13.1 µm. The measurement method of the average particle sizes is as described above. Moreover, the load at particle fracture of Ni-containing lithium composite oxide B1 was 31 mN. The method of measuring the load at particle fracture is as described above. In addition, calculation of the composition of Ni-containing lithium composite oxide B1 by ICP emission analysis demonstrated that the oxide was Li_{1.05}Ni_{0.80}Co_{0.10}Mn_{0.10}B_{0.005}O₂.

### [Fabrication of Positive Electrode]

A positive electrode active material was used such that Ni-containing lithium composite oxides A and B1 were mixed in a mass ratio of 5:5. The following materials were mixed such that the positive electrode active material was 97.5% by mass, carbon black was 1% by mass, and polyvinylidene fluoride was 1.5% by mass, and the mixture was mixed with N-methyl-2-pyrrolidone (NMP) to prepare a positive electrode mixture slurry. Both sides of a positive electrode current collector made of aluminum foil having a thickness of 15 µm were coated with the slurry by a doctor blade method, and the coating film was dried, then rolled by a rolling roller under a pressure of 500 MPa to fabricate a positive electrode in which positive electrode mixture layers were formed on both sides of the positive electrode current collector. A portion without having formed the positive electrode mixture layer was arranged in the center in the longitudinal direction of the positive electrode current collector, and a positive electrode tab was attached to the portion. The thickness of the positive electrode mixture layer was about 140 µm, and the thickness of the positive electrode was about 300 µm.

### [Fabrication of Negative Electrode]

The following materials were mixed such that graphite was 98.2% by mass, a styrene-butadiene rubber was 0.7% by mass, and sodium carboxymethylcellulose was 1.1% by mass, and the mixture was mixed with water to prepare a negative electrode mixture slurry. Both sides of a negative electrode current collector made of copper foil having a thickness of 8 µm were coated with the slurry by the doctor blade method, and the coating film was dried, then rolled by a rolling roller to fabricate a negative electrode in which negative electrode mixture layers were formed on both sides of the negative electrode current collector. Portions without having formed the negative electrode mixture layers were arranged in both end portions in the longitudinal direction of the negative electrode current collector, and negative electrode tabs were attached to the portions. The thickness of the negative electrode mixture layer was about 120 µm, and the thickness of the negative electrode was about 250 µm.

### [Preparation of Non-Aqueous Electrolytic Solution]

In a mixed non-aqueous solvent of ethylene carbonate (EC) and diethyl carbonate (DEC) mixed in an equivalent volume ratio thereof, LiPF₆ was dissolved at a concentration of 1.6 mol/L to obtain a non-aqueous electrolytic solution.

### [Preparation of Non-Aqueous Electrolyte Secondary Battery]

By using the positive electrode above, the negative electrode above, the non-aqueous electrolytic solution above, and the separator, a non-aqueous electrolyte secondary battery was fabricated by the following procedure.
(1) The positive electrode and the negative electrode were wound with the separator interposed therebetween to form an electrode assembly of a wound structure.
(2) Insulating plates were arranged above and below the electrode assembly, respectively, and the wound electrode assembly was housed in a cylindrical battery outer can with a diameter of 18 mm and a height of 65 mm.
(3) Not only a current collector tab of the negative electrode was welded to the inner surface of the bottom of the battery outer can, but also a current collector tab of the positive electrode was welded to a bottom plate of a sealing assembly.
(4) A non-aqueous electrolytic solution was injected through an opening of the battery outer can, and then the battery outer can was sealed with the sealing assembly.

The aforementioned non-aqueous electrolyte secondary battery was evaluated for performance by the following method.

### [Evaluation of Discharge Capacity]

The non-aqueous electrolyte secondary battery above was charged under an environment of 25°C at a constant current of 1 It = 2,900 mA until the battery voltage reached 4.2 V, and then discharged at a constant current of 1 It until the battery voltage fell down to 2.5 V, to measure a discharge capacity (mAh/g).

### [Evaluation of Storage Characteristics]

The non-aqueous electrolyte secondary battery above was charged at a constant current of 1 It = 2,900 mA under an environment of 25°C until the battery voltage reached 4.2 V. Then, the battery was disassembled to take out the positive electrode, the non-aqueous electrolytic solution that was adhered thereto was removed, then 2 mg of the positive electrode active material was scraped off, and introduced to a heating apparatus, the inside of which was replaced with an inert gas (He gas), and then was raised from a temperature of 25°C to 500°C at a rate of temperature rise of 20°C/min. An amount of gas generated from the sample during this period was measured by a gas chromatography mass spectrometer.

### [Evaluation of Cycle Characteristics]

The non-aqueous electrolyte secondary battery above was charged and discharged under the following conditions at 25°C to determine a capacity retention.

### <Charge/Discharge Conditions>

Charge: Constant current charge was carried out at a constant current of 1 It = 2,900 mA until the battery voltage reached 4.2 V. Constant voltage charge was further carried out at a voltage of 4.2 V until the current value reached 145 mA.

Discharge: Constant current discharge was carried out at a constant current of 1 It until the voltage fell down to 2.5 V.

This charge and discharge was carried out for 100 cycles, and the capacity retention was calculated by using the following formula. Capacity retention (%): 100th cycle discharge capacity ÷ 1st cycle discharge capacity × 100

### <Example 2>

### [Synthesis of Ni-Containing Lithium Composite Oxide B2]

A Ni-containing lithium composite oxide B2 was obtained in the same manner as in Example 1, except that in second calcination step B, aluminum hydroxide (Al(OH)₃) and calcinated product B were mixed so that the molar ratio of Al to the total amount of Ni, Co, and Mn was 0.5. The average particle size of the primary particles of Ni-containing lithium composite oxide B2 was 1 µm and the average particle size of the secondary particles was 13 µm. Moreover, the load at particle fracture of Ni-containing lithium composite oxide B2 was 32 mN. In addition, calculation of the composition of Ni-containing lithium composite oxide B2 by ICP emission analysis demonstrated that the oxide was Li_{1.05}Ni_{0.80}Co_{0.10}Mn_{0.10}Al_{0.005}O₂.

A non-aqueous electrolyte secondary battery was fabricated and evaluated in the same manner as in Example 1, except that Ni-containing lithium composite oxide B2 was used instead of Ni-containing lithium composite oxide B1.

### <Comparative Example 1>

### [Synthesis of Ni-Containing Lithium Composite Oxide B3]

A Ni-containing lithium composite oxide B3 was obtained in the same manner as in Example 1, except that after having obtained calcinated product B, H₃BO₃ was not added and calcinated. The average particle size of the primary particles of Ni-containing lithium composite oxide B3 was 1 µm and the average particle size of the secondary particles was 13 µm. Moreover, the load at particle fracture of Ni-containing lithium composite oxide B3 was 13 mN. In addition, calculation of the composition of Ni-containing lithium composite oxide B3 by ICP emission analysis demonstrated that the oxide was Li_{1.05}Ni_{0.80}Co_{0.10}Mn_{0.10}O₂.

A non-aqueous electrolyte secondary battery was fabricated and evaluated in the same manner as in Example 1, except that Ni-containing lithium composite oxide B3 was used instead of Ni-containing lithium composite oxide B1.

### <Comparative Example 2>

### [Synthesis of Ni-Containing Lithium Composite Oxide B4]

A Ni-containing lithium composite oxide B4 was obtained in the same manner as in Example 1, except that after having obtained calcinated product B, H₃BO₃ was added, but not calcinated. The average particle size of the primary particles of Ni-containing lithium composite oxide B4 was 1 µm and the average particle size of the secondary particles was 13 µm. Moreover, the load at particle fracture of Ni-containing lithium composite oxide B4 was 15 mN. In addition, calculation of the composition of Ni-containing lithium composite oxide B4 by ICP emission analysis demonstrated that the oxide was Li_{1.05}Ni_{0.80}Co_{0.10}Mn_{0.10}B_{0.005}O₂.

A non-aqueous electrolyte secondary battery was fabricated and evaluated in the same manner as in Example 1, except that Ni-containing lithium composite oxide B4 was used instead of Ni-containing lithium composite oxide B1.

The evaluation results of Examples and Comparative Examples are shown in Table 1. The gas amounts of Example 2 and Comparative Examples 1 and 2 are indicated as relative values when the gas amount of Example 1 is 100. In addition, Table 1 also shows the fabrication conditions of the coating layers (added elements, with and without calcination) and the loads at particle fracture.

**[Table 1]**

| | Ni-containing lithium composite oxide B | | | Evaluation results | | |
|---|---|---|---|---|---|---|
| | Added element | Calcination | Load at Particle fracture (mN) | Discharge capacity (mAh/g) | Gas amount | Capacity retention (%) |
| Example 1 | B | Present | 31 | 169 | 100 | 96 |
| Example 2 | Al | Present | 32 | 169 | 100 | 97 |
| Comparative Example 1 | - | Absent | 13 | 166 | 150 | 80 |
| Comparative Example 2 | B | Absent | 15 | 167 | 130 | 85 |

As shown in Table 1, the batteries of Examples 1 and 2 each had the less gas amount and the higher capacity retention than the batteries of Comparative Examples 1 and 2.

### REFERENCE SIGNS LIST

10 non-aqueous electrolyte secondary battery
11 positive electrode
12 negative electrode
13 separator
14 electrode assembly
15 battery case
16 outer can
17 sealing assembly
18, 19 insulating plates
20 positive electrode tab
21 negative electrode tab
22 grooved portion
23 bottom plate
24 lower vent member
25 insulating member
26 upper vent member
27 cap
28 gasket
30 positive electrode current collector
31 positive electrode mixture layer
32, 33 primary particles
40 negative electrode current collector
41 negative electrode mixture layer

## Claims

1. A positive electrode active material for non-aqueous electrolyte secondary batteries, including:
a Ni-containing lithium composite oxide A; and
a Ni-containing lithium composite oxide B, wherein
the Ni-containing lithium composite oxide A and the Ni-containing lithium composite oxide B include 50 mol% or more of Ni with respect to a total number of mole of metal elements excluding Li,
the Ni-containing lithium composite oxide A has a load at particle fracture of 5 mN or larger, an average primary particle size of 2 µm or larger, and an average secondary particle size of 2 µm to 6 µm, and
the Ni-containing lithium composite oxide B has a load at particle fracture of 20 mN or larger, an average primary particle size of 1 µm or smaller, an average secondary particle size of 10 µm to 20 µm, and has a coating layer on a surface of the primary particle.

2. The positive electrode active material for non-aqueous electrolyte secondary batteries according to claim 1, wherein
the coating layer includes at least one or more elements selected from B, Al and Ti.

3. The positive electrode active material for non-aqueous electrolyte secondary batteries according to claim 1 or 2, wherein
the Ni-containing lithium composite oxide A and the Ni-containing lithium composite oxide B each include at least one of Co and Mn, and includes at least one metal element selected from Mg, Zr, Mo, W, Nb, Al, Cr, V, Ce, Ti, Fe, Si, K, Ga, In and B.

4. The positive electrode active material for non-aqueous electrolyte secondary batteries according to any one of claims 1 to 3, wherein
the Ni-containing lithium composite oxide A and the Ni-containing lithium composite oxide B include 80 mol% or more of Ni.

5. A non-aqueous electrolyte secondary battery (10), comprising:
a positive electrode (11) including a positive electrode active material for non-aqueous electrolyte secondary batteries according to any one of claims 1 to 4;
a negative electrode (12); and
a non-aqueous electrolyte.

## Patentansprüche

1. Positivelektroden-Aktivmaterial für Sekundärbatterien mit wasserfreiem Elektrolyt, umfassend:
ein Ni-haltiges Lithiumverbundoxid A; und
ein Ni-haltiges Lithiumverbundoxid B, wobei
das Ni-haltige Lithiumverbundoxid A und das Ni-haltige Lithiumverbundoxid B, bezogen auf eine Gesamtmolzahl von Metallelementen außer Li, 50 Mol-% oder mehr Ni umfassen,
das Ni-haltige Lithiumverbundoxid A eine Partikelbruchlast von 5 mN oder höher, eine durchschnittliche Primärpartikelgröße von 2 µm oder größer und eine durchschnittliche Sekundärpartikelgröße von 2 µm bis 6 µm aufweist, und
das Ni-haltige Lithiumverbundoxid B eine Partikelbruchlast von 20 mN oder höher, eine durchschnittliche Primärpartikelgröße von 1 µm oder kleiner und eine durchschnittliche Sekundärpartikelgröße von 10 µm bis 20 µm aufweist und eine Beschichtungsschicht auf einer Oberfläche der Primärpartikel aufweist.

2. Positivelektroden-Aktivmaterial für Sekundärbatterien mit wasserfreiem Elektrolyt nach Anspruch 1, wobei
die Beschichtungsschicht mindestens ein oder mehrere Elemente umfasst, die ausgewählt sind aus B, Al und Ti.

3. Positivelektroden-Aktivmaterial für Sekundärbatterien mit wasserfreiem Elektrolyt nach Anspruch 1 oder 2, wobei
das Ni-haltige Lithiumverbundoxid A und das Ni-haltige Lithiumverbundoxid B jeweils mindestens eines von Co und Mn umfassen und mindestens ein Metallelement umfassen, das ausgewählt ist aus Mg, Zr, Mo, W, Nb, Al, Cr, V, Ce, Ti, Fe, Si, K, Ga, In und B.

4. Positivelektroden-Aktivmaterial für Sekundärbatterien mit wasserfreiem Elektrolyt nach einem der Ansprüche 1 bis 3, wobei
das Ni-haltige Lithiumverbundoxid A und das Ni-haltige Lithiumverbundoxid B 80 Mol-% oder mehr Ni umfassen.

5. Sekundärbatterie (10) mit wasserfreiem Elektrolyt, umfassend:
eine Positivelektrode (11), die ein Positivelektroden-Aktivmaterial für Sekundärbatterien mit wasserfreiem Elektrolyt nach einem der Ansprüche 1 bis 4 umfasst;
eine Negativelektrode (12); und
einen wasserfreien Elektrolyten.

## Revendications

1. Matériau actif d'électrode positive pour batteries rechargeables à électrolyte non aqueux, comprenant :
un oxyde composite de lithium contenant du Ni A ; et
un oxyde composite de lithium contenant du Ni B,
dans lequel
l'oxyde composite de lithium contenant du Ni A et l'oxyde composite de lithium contenant du Ni B comprennent 50 % en moles ou plus de Ni par rapport au nombre total de moles d'éléments métalliques à l'exclusion du Li,
l'oxyde composite de lithium contenant du Ni A a une charge à la rupture des particules de 5 mN ou plus, une taille de particule primaire moyenne de 2 µm ou plus, et une taille de particule secondaire moyenne de 2 µm à 6 µm, et
l'oxyde composite de lithium contenant du Ni B a une charge à la rupture des particules de 20 mN ou plus, une taille de particule primaire moyenne de 1 µm ou moins, une taille de particule secondaire moyenne de 10 µm à 20 µm, et a une couche de revêtement sur une surface de la particule primaire.

2. Matériau actif d'électrode positive pour batteries rechargeables à électrolyte non aqueux selon la revendication 1, dans lequel
la couche de revêtement comprend au moins un ou plusieurs éléments choisis parmi B, Al et Ti.

3. Matériau actif d'électrode positive pour batteries rechargeables à électrolyte non aqueux selon la revendication 1 ou 2, dans lequel
chacun parmi l'oxyde composite de lithium contenant du Ni A et l'oxyde composite de lithium contenant du Ni B comprend au moins l'un parmi Co et Mn, et comprend au moins un élément métallique choisi parmi Mg, Zr, Mo, W, Nb, Al, Cr, V, Ce, Ti, Fe, Si, K, Ga, In et B.

4. Matériau actif d'électrode positive pour batteries rechargeables à électrolyte non aqueux selon l'une quelconque des revendications 1 à 3, dans lequel
l'oxyde composite de lithium contenant du Ni A et l'oxyde composite de lithium contenant du Ni B comprennent 80 % en moles ou plus de Ni.

5. Batterie rechargeable à électrolyte non aqueux (10), comprenant :
une électrode positive (11) comprenant un matériau actif d'électrode positive pour batteries rechargeables à électrolyte non aqueux selon l'une quelconque des revendications 1 à 4 ;
une électrode négative (12) ; et
un électrolyte non aqueux.
